# EUROPÄISCHE PATENTSCHRIFT

(11) **EP 0 907 594 B1**
(45) Veröffentlichungstag und Bekanntmachung des Hinweises auf die Patenterteilung: **08.05.2002**
(21) Anmeldenummer: 97926987.5
(22) Anmeldetag: 02.06.1997
(51) Int. Cl.: B65G 45/14, B65G 45/24

(54) **ROTATIONSBANDABSTREICHER**
ROTARY BELT SCRAPER
RACLEUR ROTATIF

(30) Priorität: 01.06.1996 DE 19623314
(43) Veröffentlichungstag der Anmeldung: 14.04.1999
(73) Patentinhaber: IFT Industrie- und Fördertechnik GmbH, D-03058 Roggosen (DE)
(72) Erfinder: GOLLASCH, Joachim, D-01187 Dresden (DE); EGER, Karl-Heinz, D-03058 Gallinchen (DE)
(74) Vertreter: Eisenführ, Speiser & Partner
(86) Internationale Anmeldenummer: DE9701152
(87) Internationale Veröffentlichungsnummer: WO9746471

(56) Entgegenhaltungen:
- AU-B- 598 683
- DD-A- 159 257
- DE-A- 2 534 625
- SOVIET PATENT ABSTRACTS Section PQ, Week 9243 9.Dezember 1992 Derwent Publications Ltd., London, GB; Class Q35, AN 92-355882 XP002043333 & SU 1 694 457 A (MEKHANOBR CONS BUR) , 30.November 1991
- SOVIET INVENTIONS ILLUSTRATED Section PQ, Week 8346 28.Dezember 1983 Derwent Publications Ltd., London, GB; Class Q35, AN 83-819053 XP002043334 & SU 988 701 A (UKR COAL DRESSING R) , 15.Januar 1983

## Beschreibung

Die Erfindung betrifft einen Rotationsbandabstreicher der im Oberbegriff des Anspruchs 1 angegebenen Art.

Rotationsbandabstreicher werden zu Reinigung der Tragseite der Förderbänder von Förderanlagen, beispielsweise des Förderbandes eines Endlosgurtbandförderers für Schüttgüter, eingesetzt. Mit den an der Untertrumseite der Förderanlage angeordneten Rotationsbandabstreichern ist vielfach eine bessere Reinigungswirkung erzielbar, als es mit als feststehenden Gurtbandschabern der Fall ist. Darüberhinaus sind Rotationsbandabstreicher vorteilhaft, weil mit den unterschiedlichen Gurtteilen stets wechselnde Kantenbereiche in Kontakt kommen. Damit wird das Ausschleifen von Kantenbereichen und eine dadurch verringerte lokale Reinigungswirkung unterbunden.

Aus der US-PS 4 155 442 ist ein radförmiger Rotationsbandabstreicher vorbekannt, welcher einen aus einem bandförmigen Material gefertigten Ring aufweist, der durch mehrere, sich von der Ringinnenseite radial nach innen erstreckende Speichen mit einer zentrischen, als Drehpunkt ausgebildeten Lagerung verbunden ist. Der Ring steht mit seiner Schmalseite in Wirkkontakt mit der zu reinigenden Bandseite. Die Lagerung des Rotationsbandabstreichers ist auf einer Traverse unterhalb des zurücklaufenden Förderbandes vorgesehen. Der Rotationsbandabstreicher befindet sich zwecks Antrieb durch das Förderband mit einer Ringkante seitlich der Bandmitte in Wirkungseingriff mit der Tragseite des Förderbandes. Dieser Eingriff wird durch eine geringfügige Neigung der durch die Speichen des Rotationsbandabstreichers aufgespannten Ebene gegenüber der durch die Tragseite des Förderbandes bestimmten Ebene unterstützt.

Aus den SOVIET PATENT ABSTRACTS AN 83-819053 ist ein Bandreinigungsmechanismus bekannt, der mehrere sich radial erstreckende, elastisch ausgebildete Abstreichelemente aufweist. Die elastisch ausgebildeten Abstreichelemente sind selbst starr mit einem Drehkopf verbunden.

Die vorstehend beschriebene Lösung für eine Rotationsbandabstreicher weist den Nachteil auf, daß die Reinigungsleistung bei konstanter Laufgeschwindigkeit des Förderbandes und bei größtmöglichen Durchmesser des Speichenrades eingeschränkt ist.

Darüber hinaus weisen Rotationsbandabstreicher des vorgehend beschriebenen Typs insbesondere im Mittenbereich des Bandes eine verminderte Reinungsleistung auf, insbesondere, wenn das Fördergut klebende Eigenschaften aufweist und sich damit nur schwer vom Förderband lösen läßt.

Ausgehend von den Mängeln des Standes der Technik liegt der Erfindung die Aufgabe zugrunde, einen Rotationsbandabstreicher anzugeben, welcher eine einfache Konstruktion mit hoher Funktionalität aufweist und sich gleichzeitig durch eine erhöhte Reinigungsleistung auszeichnet.

Diese Aufgabe wird durch die im Anspruch 1 angegebenen Merkmale gelöst.

Die Erfindung schließt die Erkenntnis ein, daß die Reinigungsleistung eines Rotationsbandabstreichers im wesentlichen dadurch bestimmt wird, in welchem Maße das mindestens eine Reinigungselement des Rotationsbandabstreichers mit dem Band in Wechselwirkung tritt.

Wenn nicht der Radreifen, sondern radial gerichtete Komponenten aufweisende Elemente - also praktisch die "Speichen" - eines rotierenden Rades mit dem zu reinigenden Band in Wechselwirkung treten, vergrößert sich einerseits die Zahl der wirksamen Elemente und andererseits die relative Positionionierung des jeweiligen Elements während des Eingriffs, so daß sich eine verbesserte Reinigungswirkung insbesondere schon deshalb ergibt, weil der "Anstellwinkel" der Elemente bei aufeinanderfolgenden Banddurchläufen unterschiedlich ist. Insbesondere schaben die Abstreicher mit Teilen ihrer Breitseite auch mindestens mit einer Bewegungskomponente quer zur Bandrichtung, so daß auch anhaftende Teile beseitigt werden, welche in Längsrillierungen des Bandes haften, die durch den Betrieb entstanden sind und durch übliche Abstreifer nicht beseitigt werden. Auch läßt sich durch eine radiale Bewegungskomponente zusätzlich die Relativgeschwindigkeit zwischen Abstreicher und Band erhöhen.

Außerdem ist der relative Abstand von aufeinanderfolgenden Abstreichelementen zur Mitte des Rotationsabstreichers hin verkleinert, so daß auch insoweit eine erhöhte Reinigungswirkung erzielbar ist. Dies alles läßt sich unter der Prämisse erreichen, daß durch den stets wechselnden Kontakt mit dem Band ein Ausschleifen einzelner Bereiche der Abstreichelemente auch bei der erfindungsgemäßen Lösung vermieden ist. Insbesondere durch "Radspeicher" mit unterschiedlich angeordneten Eingriffsbereichen verschiedener Form und Länge läßt sich die Intensität der Abstreichwirkung "programmieren".

Entsprechend einer bevorzugten Ausführungsform der Erfindung weist der auf einer Traverse an dem Untertrum eines Endlosförderers angeordneten Rotationsbandabstreichers mehrere Abstreichelemente auf, welche als quader-, staboder bandförmige Arme ausgebildet sind. Die Abstreichelemente sind erfindungsgemäß im wesentlichen speichenartig oder in anderer Weise radialsymmetrisch in einer Ebene angeordnet, welche sich im wesentlichen parallel zur Transportfläche des Förderbandes erstreckt.

Die Abstreichelemente sind mit einem in der Rotationsachse des positionierten Drehkopf derart verbunden, daß jeweils eine Schmalseite der Abstreichelemente mit der zu reinigenden Tragseite des Förderbandes in Kontakt tritt. Dadurch ist eine besonders gute Abstreichwirkung erreichbar.

An der Verbindungsstelle zwischen Drehkopf und Abstreichelement ist jeweils ein Federmittel vorgesehen, durch dessen Federkraft das Abstreichelement mit im wesentlichen gleichbleibendem Druck gegen die zu reinigende Tragseite des Förderbandes gepreßt wird. Es sind dabei auch Einrichtungen günstig verwendbar, welche den Anpreßdruck für die Abstreichelemente hydraulisch oder durch Gewichtskräfte erzeugen.

Die Abstreichelemente sind an den rotationssymmetrisch ausgebildeten Drehkopf sich radial erstreckend angelenkt, wobei vorzugsweise mindestens drei Abstreichelemente vorgesehen sind.

Entsprechend einer günstigen Weiterbildung der Erfindung ist eine tangentiale Anlenkung der Abstreichelemente an den Drehkopf vorgesehen.

Der Rotationsspeichenabstreicher wird bei einer asymmetrischen Anordnung des Rotationsbandabstreichers (Abstand a zwischen Förderbandmitte und Drehkopfachse) durch die unterschiedlich großen Reibungskräfte der auf das Förderband über die Flächenpressung wirkenden Normalkräfte der rechts und links von der Förderbandmitte befindlichen Abschnitte der Abstreichelemente und durch die Bewegung des Förderbandes mit der Geschwindigkeit v_{B} in eine Drehbewegung mit der Winkelgeschwindigkeit ω_{R} versetzt. Die Größe des Abstandes a wird in Abhängigkeit von der Förderbandbreite und dem Verschmutzungsgrad des Förderbandes gewählt.

Bei symmetrischer Anordnung des Rotationsbandabstreichers (Abstand zwischen der Föderbandmitte und der Drehkopfachse a = Null) wird die für den Reinigungseffekt erforderliche Drehbewegung durch einseitige Erhöhung der Reibungskräfte zwischen Förderband und dem freien bzw. peripheren Ende der Abstreichelemente erreicht, indem der Drehkopf des Rotationsbandabstreichers unter einem lateralen Neigungswinkel α geringer Größe an der vorgesehenen Traverse des Förderbandgerüstes befestigt wird.

Zwecks Anpassung an die Art des Fördergutes und den Grad der Verschmutzung der Tragseite des Förderbandes weisen die Abstreichelemente des Rotationsbandabsteichers entsprechend einer anderen vorteilhaften Weiterbildung der Erfindung eine mehr oder weniger stark ausgeprägte Krümmung auf. Hierbei ist eine bogen- oder S-förmige Ausgestaltung der Abstreichelemente von besonderem Vorteil.

Gemäß einer anderen bevorzugten Weiterbildung der Erfindung sind die freien Enden der benachbart angeordneten Abstreichelemente durch sich vorzugsweise geradlinig erstreckende Abstandhalter miteinander verbunden. Dadurch kann in vorteilhafter Weise eine mechanische Überbelastung der Verbindungsstelle zwischen Abstreichelement und Drehkopf vermieden werden. Diese Form der Erfindung ist vorzugsweise bei größeren Förderbandbreiten einzusetzen.

Entsprechend einer anderen vorteilhaften Ausführungsform der Erfindung weist der Rotationsbandabstreicher einen die Abstreichelemente umgreifenden, in einem an einer Traverse des Endlosförderers befestigten Gegenlager geführten, Lagerring auf. Die Abstreichelemente erstrecken sich von dem inneren Rand dieses Lagerringes radial nach innen und überragen den Lagerring in axialer Richtung, um den erforderlichen Wirkkontakt mit dem zu reinigenden Förderband herstellen zu können. Die Erzeugung des erforderlichen Anpreßdruckes für die Abstreichelemente erfolgt - wie vorstehend bereits beschrieben - beispielsweise durch Federmittel, welche an der Verbindungsstelle zwischen Lagerring und Abstreichelement vorgesehen sind. Gleichermaßen sind geradlinig speichenförmige oder gekrümmt ausgebildete Abstreichelemente einsetzbar.

Die Abstreichelemente des Rotationsbandabstreichers sind in vorteilhafter Weise zweiteilig ausgebildet. Sie weisen jeweils einen Tragarm und einen mit diesem verbundenen Abstreichkörper auf, über welchen der Wirkkontakt mit dem zu reinigenden Förderband hergestellt wird. Entsprechend einer günstigen Weiterbildung der Erfindung sind die aus Metall oder aus Gummi gefertigten Abstreichkörper zusätzlich in einzelne Segmente untergliedert, welche unabhängig voneinander durch mehrere Verschraubungen mit dem Tragarm verbunden sind. Dadurch ist ein bequemes Austauschen von unterschiedlich verschlissenen Abstreichkörpern möglich, ohne daß das gesamte Abstreichelement ausgewechselt werden muß.

Wenn der Abstreichkörper aus Gummi, Kunststoff oder Metall besteht, ist im Falle der Verwendung von Kunststoff Polyurethan vorgesehen ist, während im Falle der Verwendung eines Metalls ein Hartmetallwerkstoff, insbesondere ein Werkzeugstahl mit einem oder mehreren Legierungsbestandteil(en) von Cr, Mo oder Va mit Gewichtsanteil(en) im Bereich von 0,5 bis 5% vorgesehen ist.

Entsprechend einer anderen Weiterbildung der Erfindung sind die vorstehend beschriebenen Rotationsbandabstreicher in Kombination mit anderen Förderbandreinigern, beispielsweise mit einem Balkenfördergurtreiniger oder in doppelter Anordnung eingesetzt. Die einzelenen Förderbandreiniger sind in Reihe seitlich zur Längsachse des Förderbandes versetzt angeordnet.

Die Kombination Rotationsspeicherabstreicher/Balkenreiniger ist besonders platzsparend und ermöglicht einen Einbau an relativ engen Stellen. Mit der Doppelanordnung der Rotationsbandabstreicher, welche ich gegenläufig drehen, wird in günstiger Weise ein besonders wirksamer Reinigungseffekt bei einem Förderband mit hartnäckigen Anbakkungen erreicht.

Rotationsbandabstreicher gemäß der Erfindung ermöglichen eine nahezu vollständige Reinigung der Förderbänder von Verschmutzungen und am Band anhaftenden Resten des Fördergutes. Besonders in Fällen, in denen das Fördergut klebrige Eigenschaften hat und sich nur zögernd vom Förderband löst, zeigt der Rotationsspeichenabstreicher eine vorzügliche Reinigungswirkung.

Oft muß bei hartnäckigen Verschmutzungen mit Nachreinigern gearbeitet werden. Der Rotationsbandabstreicher der vorstehend beschriebenen Ausführungen ermöglicht Haupt- und Nachreinigung mit einer Vorrichtung. Das ist besonders in der Problemzone (etwa 15% der Bandbreite rechts und links von der Bandmitte in Förderrichtung), in der sich verstärkt Anbackungen bilden, für eine gute Reinigungswirkung des Rotationsbandabstreichers von Bedeutung. Durch die Drehbewegung der Abstreicherelemente und die Laufbewegung des Bandes werden sich evtl. zwischen Abstreichelement und Förderband festsetzende Mineralteilchen, die eine Beschädigung des Bandes hervorrufen können, durch die bei einer Speichenumdrehung einen Angriffswinkel von 360° durchlaufenden Reibungskräfte so beansprucht, daß sie nicht verklemmen können. Die gleichen Bewegungen sowie die gleichmäßige Anpressung auf der gesamten Länge der Abstreichelemente an das Band verhindern einen unterschiedlichen Verschleiß über die Abstreicherlänge, wie er bei Balkenreinigern in der Mitte zu verzeichnen ist. Dadurch wird ein häufiges, wartungsunfreundliches und besonders kostenintensives Nachstellen oder Nachschleifen der Abstreichelemente vermieden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine erste bevorzugte Ausführungsform der Erfindung Draufsicht,
- Figur 2: eine weitere günstige Ausführungsform der in Figur 1 dargestellten Erfindung in Draufsicht,
- Figur 3a bis 3c: vorteilhafte Varianten von Abstreichelementen gemäß der Erfindung als Teildarstellungen in Draufsicht,
- Figur 4a: das Ausführungsbeispiel gemäß Figur 2 in der Darstellung als Teilschnitt längs der Linie A...A gemäß Figur 2,
- Figur 4b: eine Variante zu dem in Figur 4a dargestellten Ausführungsbeispiel die in Figur 2 gezeigte Weiterbildung der Erfindung in anderer Positionierung und in Darstellung entsprechend der Figur 4a,
- Figur 4c: eine Einzelheit E gemäß Figur 4a,
- Figur 5: eine andere günstige Ausführungsform der Erfindung in Draufsicht,
- Figur 6: eine Variante der in Figur 5 dargestellten Ausführungsform,
- Figur 7: eine andere vorteilhafte Ausführungsform der Erfindung in Draufsicht,
- Figur 8a: einen Teilschnitt längs der Linie B...B der Ausführungsform gemäß Figur 7 sowie
- Figur 8b: eine Variante der Ausführungsform gemäß Figur 8a in entsprechender Darstellung.

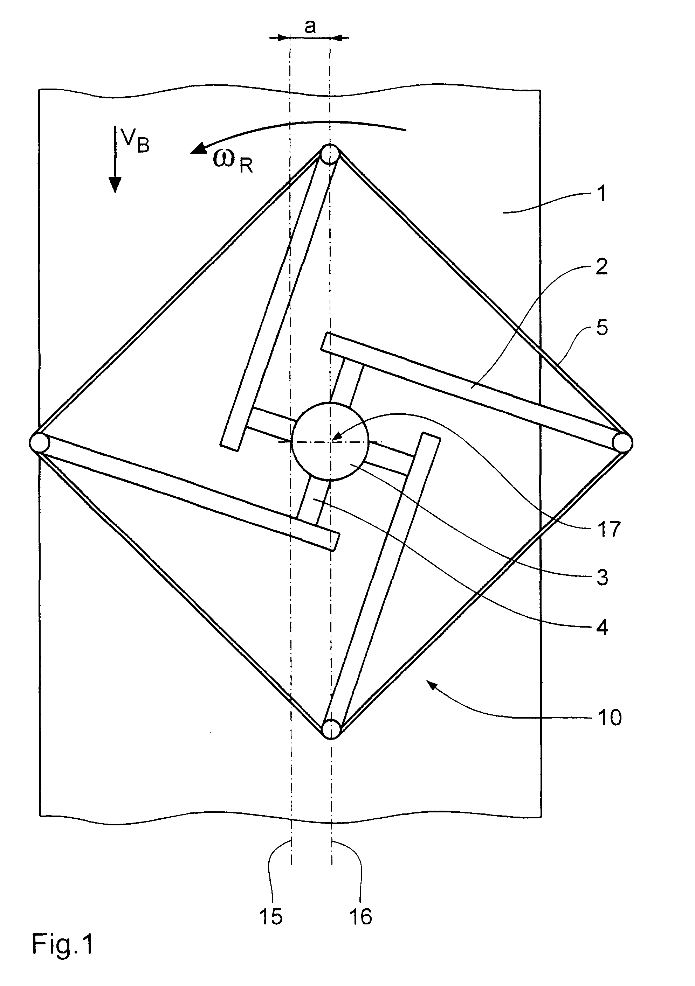

In Figur 1 ist ein unterhalb des zu reinigenden Förderbandes 1 angebrachter Rotationsbandabstreicher 10 in Draufsicht dargestellt. Die Bandgeschwindigkeit des Förderbandes ist mit v_{B} bezeichenet. Der Rotationsbandabstreicher 10 dreht sich mit einer Winkelgeschwindigkeit ω_{R}, deren Größe von der Bandgeschwindigkeit v_{B} und dem Abstand a zwischen der Mittellinie 15 des rücklaufenden Bandes 1 und der Mittellinie 16 bzw. der Rotationsachse 17 des Bandabstreichers 10 abhängt. Der seitliche Versatz a, wodurch der Rotationsbandabstreicher 10 das Förderband 1 einseitig überragt, führt zu unterschiedlich großen Reibkräften zwischen der Tragseite des Förderbandes 1 und den radialsymmetrisch angeordneten vier Abstreichelementen 2. Die Reibkraftdifferenz ist unabhängig von der jeweiligen Stellung der Abstreichelemente, so daß der Rotationsbandabstreicher 10 in eine gleichmäßige Drehbewegung versetzt wird.

Die Abstreichelemente 2 sind gleichartig ausgebildet und weisen eine Speichenform auf. Sie sind an einem Drehkopf 3 jeweils über ein Federmittel 4 angelenkt und erstrecken sich bezogen auf den Mantel des Drehkopfes in tangentialer Richtung. Die Federmittel 4 sichern ein gleichmäßiges Andrücken der Schmalseite der Abstreichelemente 2 an die zu reinigende Tragseite des Förderbandes 1 und ermöglichen so eine nahezu 100%-ige Reinigung der Tragseite des Förderbandes.

Wenn die Abstreichkörper der Abstreichelemente bestehen - je nach den durch das Transportgut des Bandes vorgegebenen Anforderungen - aus Gummi, Kunststoff oder Metall. Im Falle der Verwendung von Kunststoff ist dabei Polyurethan vorgesehen, während im Falle der Verwendung eines Metalls ein Hartmetallwerkstoff, insbesondere ein Werkzeugstahl mit einem oder mehreren Legierungsbestandteil(en) von Cr, Mo oder Va mit Gewichtsanteil(en) im Bereich von 0,5 bis 5% besonders geeignet ist.

Um eine übermäßige mechanische Belastung des Befestigungspunktes der - bedingt durch die gewählte Breite des Förderbandes - relativ langgestreckten Abstreichelemente 2 am Drehkopf 3 zu vermeiden, sind die freien Enden der jeweils benachbart angeordneten Abstreichelemente durch einen geradlinigen Steg 5 verbunden.

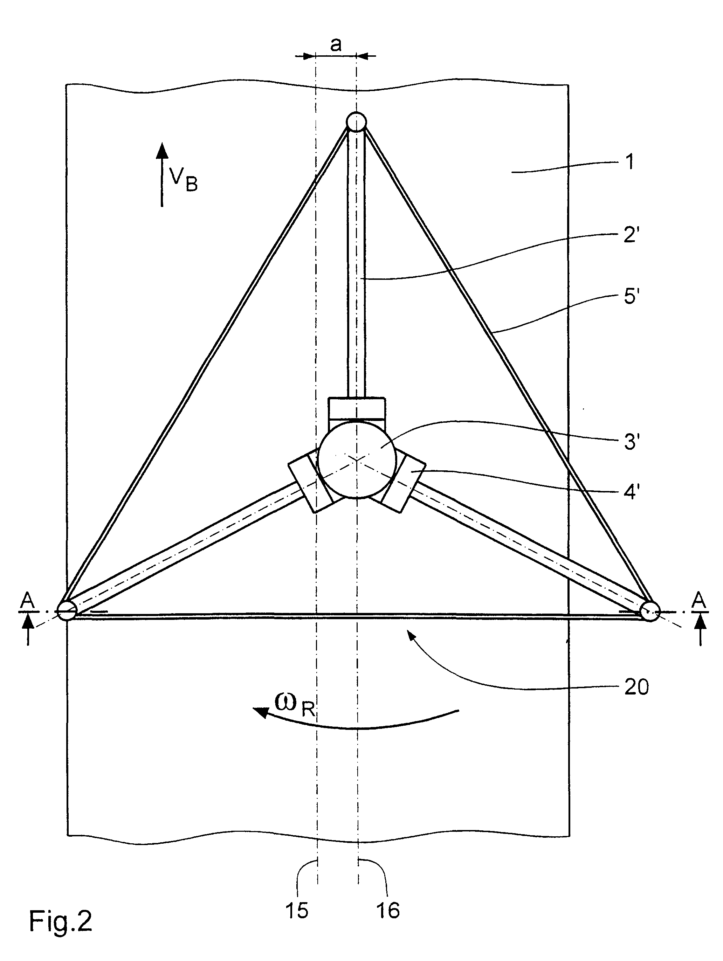

Die in Figur 2 dargestellte Form eines Rotationsbandabstreichers 20 weist sich radial von dem Drehkopf 3' nach außen erstreckenede, speichenförmig ausgebildete Abstreichelemente 2' auf. Die drei Abstreichelemente 2' sind ebenfalls über Federmittel 4' mit einem Drehkopf 3' verbunden und weisen aus Gründen der mechanischen Stabilität an ihren freien Enden jeweils eine Stegverbindung 5' zu dem benachbart angeordneten Abstreichelement auf. Für die Bewegungsabläufe gelten die bereits in den Ausführungen zu Figur 1 erläuterten Bedingungen.

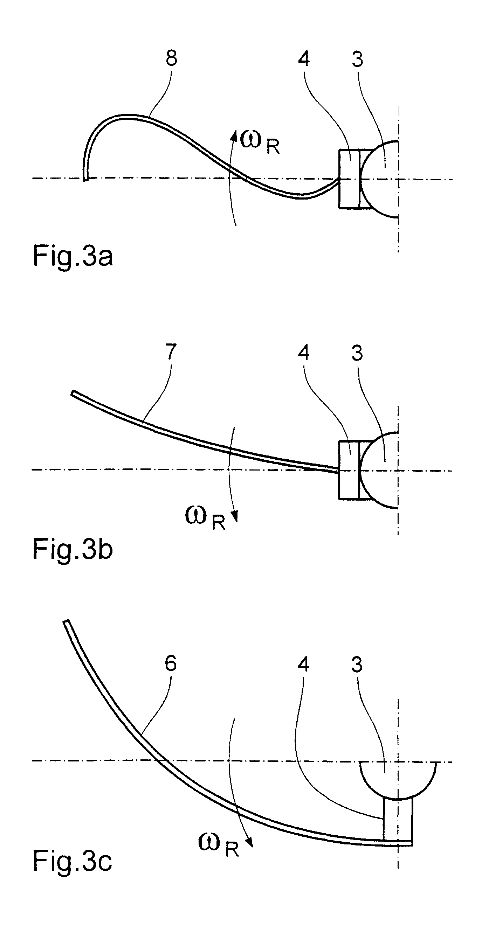

Die in den Figuren 3a, 3b und 3c gezeigten Ausführungsformen für Abstreichelemente 6, 7 und 8 sind bogenförmig ausgebildet oder weisen ein S-förmiges Längsschnittprofil auf. Die Abstreichelemente sind radial (Figuren 3a und 3b) oder tangential (Figur 3c) unter Verwendung eines Federmittels 4 an den Drehkopf 3 angelenkt.

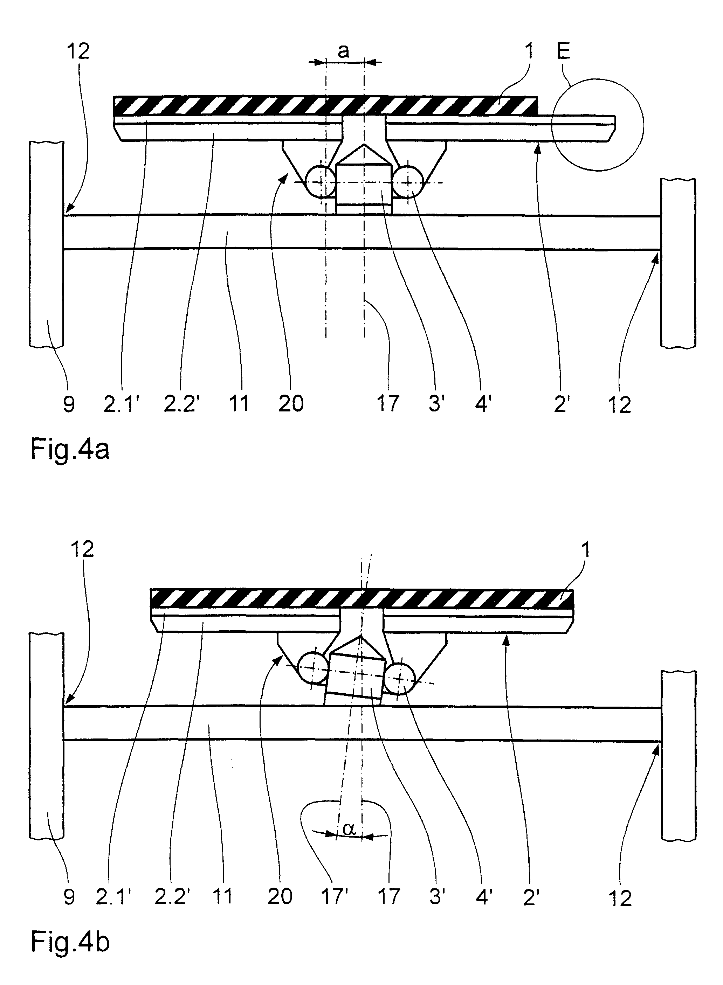

Die in den Figuren 4a und 4b dargestellten Ansichten von Schnitten längs der Linie A...A entsprechend Figur 2 bei verschiedenen Formen der Anordnung des Rotationsbandabstreichers 20 zeigen den Aufbau der Abstreichelemente 2' sowie deren Position in Bezug auf das zu reinigende Förderband 1.

Der in Figur 4a gezeigte Rotationsbandabstreicher 20 ist auf einer sich zwischen zwei Stützholmen des Endlosförderers erstreckenden Traverse 11 unter dem zurücklaufenden Förderband 1 positioniert. Die Verbindungsstelle 12 zwischen Holm 9 und Traverse 11 ist als Sollbruchstelle ausgebildet, so daß bei einem Verklemmen oder einer anderen Form der Überbelastung des Rotationsbandabstreichers 20 dessen Tragkonsruktion von dem Endlösförderer getrennt wird und eine Beschädigung des Förderbandes vermieden werden kann.

Der Rotationsbandabstreicher 20 in Bezug auf die Mittelachse des Bandes 1 um den Betrag a seitlich versetzt angeordnet, so daß ein durch Reibschluß zwischen den Abstreichelementen 2' und dem Band 1 bewirkter Antrieb des Rotationsbandabstreichers durch unterschiedlich große, über die Abstreichelemente auf die Achse 17 des Drehkopfes 3' übertragene Drehmomente gesichert ist. Die Federmittel 4' erzeugen eine gleich große Anpreßkraft an die zu reinigende Tragseite des Förderbandes 1 über die gesamte Länge der Abstreichelemente 2'.

Die Abstreichelemente 2' sind zweiteilig ausgebildet und in einen Abstreichkörper 2.1' sowie einen Tragarm 2.2' untergliedert. Dadurch ist ein bequemer Austausch der mechanisch stark beanspruchten Abstreichkörper 2.1' möglich, wenn ein fortgeschrittener Verschleiß dies erfordert.

Der in Figur 4b gezeigte Rotationsbandabstreicher 20 weist die gleiche Breite auf wie das zu reinigende Förderband 1. Um das für den Antrieb durch das Förderband erfoderliche Drehmoment erzeugen zu können, ist eine geringfügige Neigung der Rotationsachse 17 gegenüber der Senkrechten vorgesehen. Der laterale Neigungswinkel α bewirkt bei gleichartig ausgebildeten Federmitteln 4' einen unterschiedlichen Anpreßdruck an den beiden Förderbandseiten und dadurch verschieden große Drehmomente bezüglich der Achse 17'.

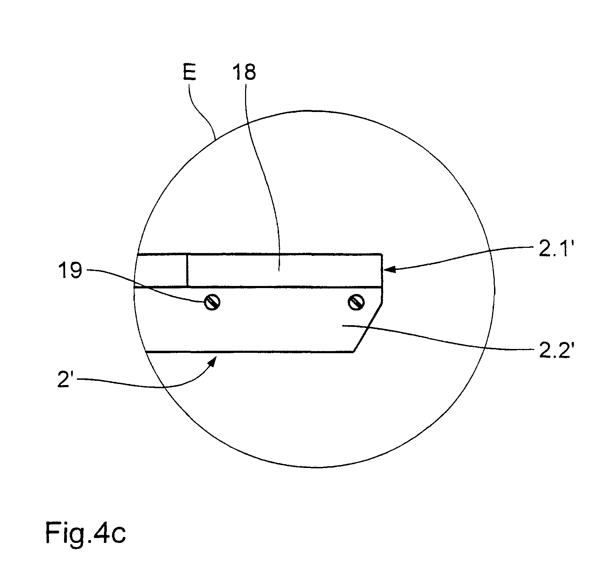

Figur 4c zeigt als Einzelheit E entsprechend Figur 4a den Aufbau eines Abstreichelements 2'. Die Abstreichelemente sind in einen Abstreichkörper 2.1' und einen Tragarm 2.2' untergliedert. Um dem unterschiedlichen Grad des Verschleißes entsprechend einen Austausch vornehmen zu können, sind die aus Metall oder Gummi gefertigten Abstreichkörper (2.1') in Segmente 18 geteilt. Jedes Segment 18 ist einzeln durch mehrere Verschraubungen 19 an dem Tragarm 2.2' befestigt.

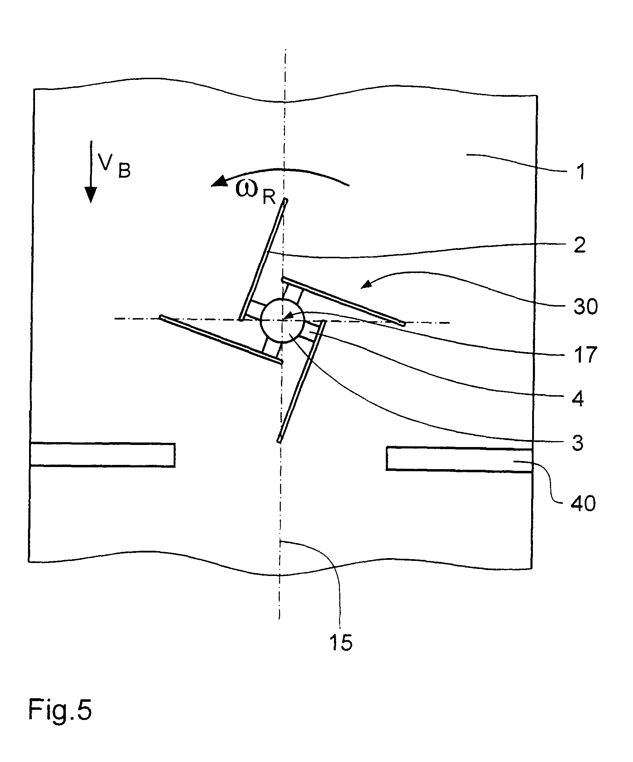

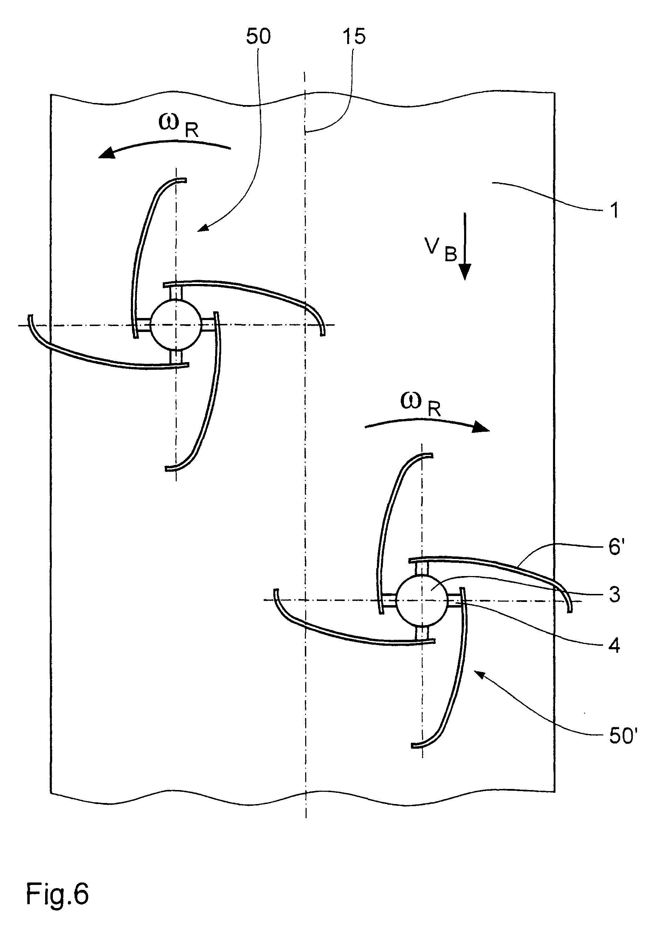

Durch die in den Figuren 5 und 6 - in Draufsicht auf die an der Unterseite des Förderbandes vorgesehenen Rotationsbandabstreicher - dargestellten Möglichkeiten der Kombination mehrerer der erfindungsgemäß gestalteten Rotationsbandabstreicher oder eines Rotatiionsbandabstreichers mit herkömmlichen Reinigungsvorrichtungen sind verbesserte Reinigungsleistungen erzielbar.

Gemäß Figur 5 sind zwei gleichartig ausgebildete Rotationsbandabstreicher 50, 50' in Längsrichtung des Förderbandes 1 versetzt und rechts bzw. links der Längsachse 15 des Bandes 1 angeordnet. Die Rotationsbandabstreicher 50, 50' weisen eine entgegengesetzte Drehrichtung auf. Die Abstreichelemente 6' sind bogenförmig ausgebildet und tangential an den jeweiligen Drehkopf 3 angelenkt. Die die Abstreichelemente 6' an die Tragseite des Förderbandes 1 pressenden Federmittel sind mit 4 bezeichnet.

Die in Figur 6 dargestellte Anordnung weist einen erfindungsgemäßen, im wesentlichen der Ausführungsform gemäß Figur 1 entsprechenden Rotationsbandabstreicher 30 auf, dessen Drehachse 17 die Längsachse 15 des Förderbandes 1 senkrecht schneidet. In Laufrichtung des Förderbandes 1 versetzt sind zwei herkömmliche Balkenfördergurtreiniger 40 angeordnet, welche von der Bandaußenseite her jeweils etwa ein Drittel der Breite des Förderbandes erfassen. Das zentrale, am stärksten verschmutzte Drittel des Förderbandes wird durch den erfindungsgemäßen, tangential über Federmittel 4 an einen Drehkopf 3 angelenkte Abstreichelemente 2 aufweisenden Rotationsbandabstreicher 30 gereinigt.

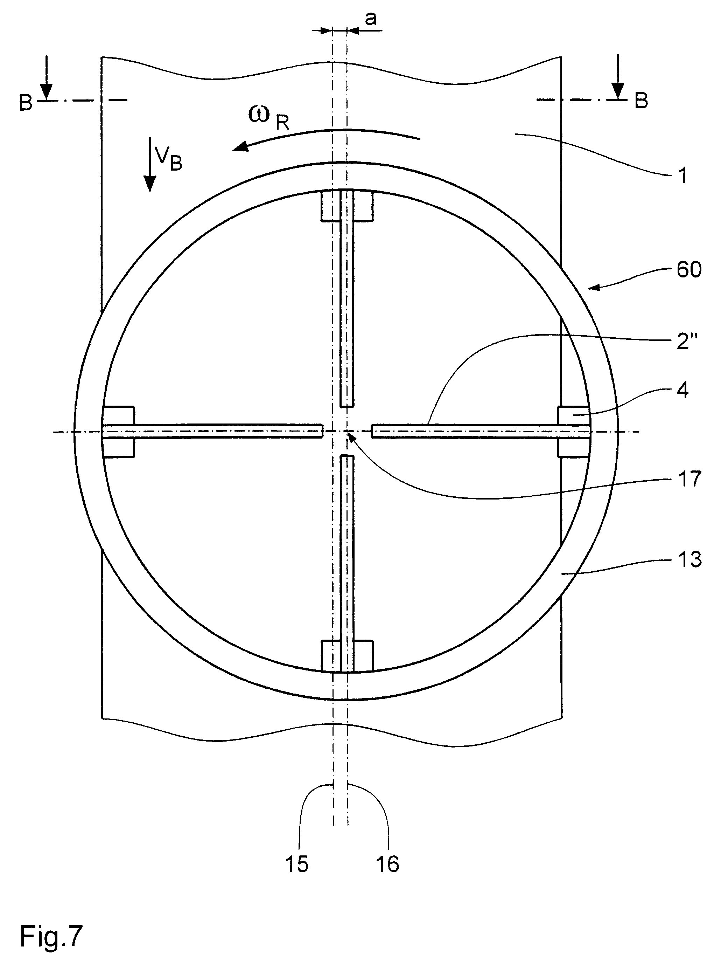

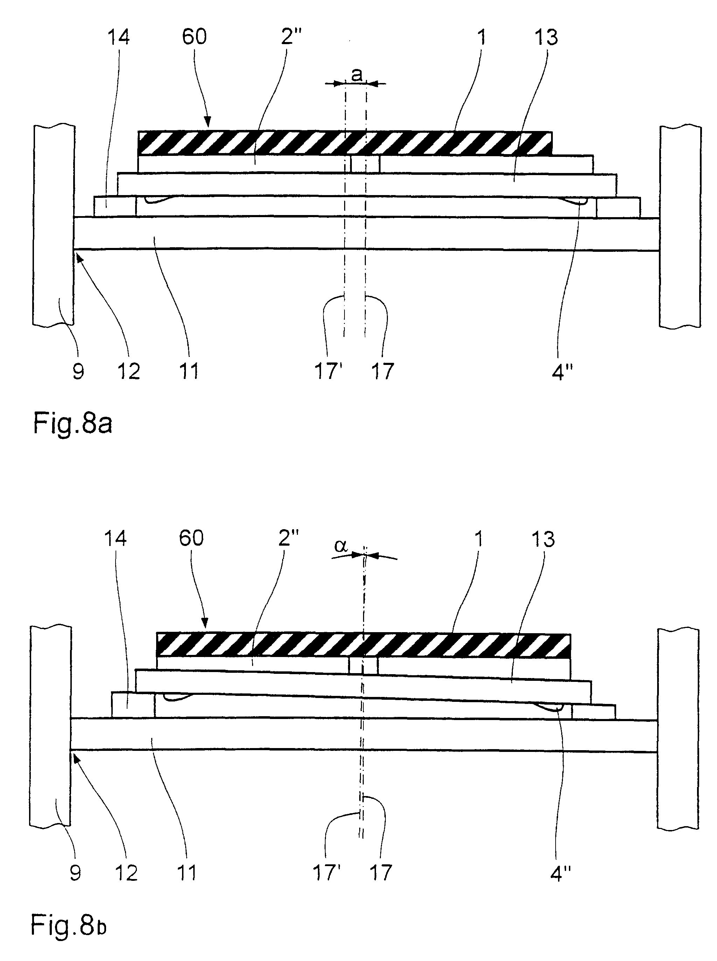

Der in Figur 7 in Draufsicht an der Bandunterseite und in den Figuren 8a und 8b in Ansicht eines Schnittes längs der Linie B...B gemäß Figur 7 in unterschiedlichen Positionen dargestellte Rotationsbandabstreicher 60 weist einen einen die Abstreichelemente 2" umgreifenden Lagerring 13 auf, der in einem an einer Traverse 11 zwischen den Stützholmen 9 des Endlosförderers befestigten Gegenlager 14 geführten,. Die geradlinig ausgebildeten Abstreichelemente 2" erstrecken sich von dem inneren Rand dieses Lagerringes 13 radial nach innen und überragen den Lagerring 13 in axialer Richtung, um den erforderlichen Wirkkontakt mit dem zu reinigenden Förderband 1 herstellen zu können. Die Erzeugung des erforderlichen Anpreßdruckes für die Abstreichelemente 2" erfolgt durch Federmittel 4", welche an der Verbindungsstelle zwischen Lagerring 13 und Abstreichelement 2" vorgesehen sind. Der Antrieb des Rotationsbandabstreichers 60 erfolgt durch das zu reinigende Förderband 1, wobei das dazu notwendige Drehmoment durch Mittenversatz oder geringfügige laterale Neigung gegenüber dem Förderband - wie bereits in den Erläuterungen zu den Figuren 4a und 4b beschrieben - erzeugt wird.

Die erfindungsgemäßen Rotationsbandabstreicher werden direkt hinter der Abwurftrommel, jedoch noch vor der Andrucktrommel des Endlosförderers dergestalt angeordnet, daß sie mit iherer Peripherie nicht in die Abwurfparabel des Fördergutes hineinragen. Die abgestrichenen Verschmutzungen werden über Schüttguttrichter in gesonderte Aufgabetröge überführt.

Die Erfindung beschränkt sich in ihrer Ausführung nicht auf die vorstehend angegebenen bevorzugten Ausführungsbeispiele. Vielmehr ist eine Anzahl von Varianten im Rahmen der Ansprüche denkbar.

## Patentansprüche

1. Rotationsbandabstreicher (10; 20; 30; 50'; 60) für ein Förderband, bestehend aus einer Anordnung mit mindestens einem, einen zum Anliegen an einem Förderband ausgebildeten Kantenbereich aufweisenden und um eine im wesentlichen senkrecht zu einer zu reinigenden Bandebene verlaufenden Drehachse rotierenden Abstreichelement (2; 2'; 2.2'; 6; 6'; 7; 8) zum Entfernen von an dem Förderband anhaftenden Verschmutzungen, wobei das Abstreichelement mindestens einen Bereich aufweist, der eine in Bezug auf die Drehachse (17; 17') im wesentlichen radial gerichtete Komponente aufweist und jedem Abstreichelement (2; 2'; 2.2'; 5; 6; 6'; 7; 8) ein Federmittel (4; 4'; 42') derart zugeordnet ist, daß das Abstreichelement (2; 2'; 2.2'; 5; 6; 6'; 7; 8) durch die Federkraft des Federmittels (4; 4'; 4.2') im wesentlichen gleichmäßig an eine zu reinigende Tragseite des Förderbandes (1) preßbar ist, **dadurch gekennzeichnet, daß** jedes Abstreichelement (2; 2'; 2.2'; 5; 6; 6'; 7; 8) jeweils über ein Federmittel (4) an einem Drehkopf (3) angelenkt ist.

2. Rotationsbandabstreicher nach Anspruch 1, **dadurch gekennzeichnet, daß** das Abstreichelement zum Bilden eines Reibschlusses mit einem zu reinigenden Förderband an der Untertrumseite der Förderbandanlage in Wirkkontakt zum rotierenden Antrieb um die senkrecht zur Bandoberfläche gerichteten Drehachse ausgebildet ist, wobei quer zur Bandrichtung gesehen die Krafteinleitung an einer Seite der Drehachse überwiegt.

3. Rotationsbandabstreicher nach Anspruch 2, **dadurch gekennzeichnet, daß** mehrere Abstreichelemente (2', 7) rotationssymmetrisch angeordnet sind.

4. Rotationsbandabstreicher nach Anspruch 3, **dadurch gekennzeichnet, daß** die Abstreichelemente (2') die Speichen eines Rades bilden.

5. Rotationsbandabstreicher nach Anspruch 1, **dadurch gekennzeichnet, daß** die Abstreichelemente (2, 2', 2", 6, 6', 7, 8) an einem zentrisch gelagerten Drehkopf (3, 3') und/oder an einem um die Drehachse rotierend gelagerten Ring (13) befestigt sind.

6. Rotationsbandabstreicher nach Anspruch 1, **dadurch gekennzeichnet, daß** die Abstreichelemente (2") innerhalb eines rotierenden Ringes (13) oder Teilrings in Form eines Radreifens angeordnet sind und sich von dessen Innenseite im wesentlichen radial nach innen erstrecken.

7. Rotationsbandabstreicher nach Anspruch 1, **dadurch gekennzeichnet, daß** die Schmalseite der Abstreichelemente (2, 2', 2", 5, 6, 6', 7, 8) der zu reinigenden Tragseite des Förderbandes (1) zugewandt ist.

8. Rotationsbandabstreicher nach Anspruch 1, **dadurch gekennzeichnet, daß** der Drehkopf (3, 3') oder die Rotationsachse (17) der Abstreichelemente (2, 2', 2", 5, 6, 6', 7, 8) zur außermittigen Anordnung in Bezug auf eine Längsachse eines Förderbandes (1) derart ausgebildet sind, daß die Abstreichelemente das Förderband seitlich unsymmetrisch überragen.

9. Rotationsbandabstreicher nach Anspruch 1, **gekennzeichnet durch** einen geringen lateralen Neigungswinkel α gegenüber der **durch** das Förderband (1) aufgespannten Ebene.

10. Rotationsbandabstreicher nach Anspruch 1, **dadurch gekennzeichnet, daß** das Abstreichelement (5, 6, 6', 7, 8) einen mindestens einseitig gekrümmten Verlauf aufweist.

11. Rotationsbandabstreicher nach Anspruch 10, **dadurch gekennzeichnet, daß** das Abstreichelement (5, 6, 6', 7, 8) bogen- oder S-förmig ausgebildet ist.

12. Rotationsbandabstreicher nach Anspruch 1, **dadurch gekennzeichnet, daß** die freien Enden mehrerer Abstreichelemente (2, 2') durch Abstandshalter (5, 5') verbunden sind.

13. Rotationsbandabstreicher nach Anspruch 1, **dadurch gekennzeichnet, daß** die Abstreichelemente (2, 2', 2") auswechsel- und/oder nachstellbar ausgestaltet sind und/oder aus einem nicht das Förderband kontaktierenden Tragarm (2.2') und einem an dem Band anliegenden Abstreichkörper (2.1'), bestehen, der nicht vollständige radiale Länge des Abstreichelements aufweist.

14. Rotationsbandabstreicher nach Anspruch 1, **dadurch gekennzeichnet, daß** der Abstreichkörper (2.1') aus Gummi, Kunststoff oder Metall besteht.

15. Rotationsbandabstreicher nach Anspruch 14, **dadurch gekennzeichnet, daß** im Falle der Verwendung von Kunststoff Polyurethan vorgesehen ist, während im Falle der Verwendung eines Metalls ein Hartmetallwerkstoff, insbesondere ein Werkzeugstahl mit einem oder mehreren Legierungsbestandteil(en) von Cr, Mo oder Va mit Gewichtsanteil(en) im Bereich von 0,5 bis 5 % vorgesehen ist.

16. Rotationsbandabstreicher nach Anspruch 1, **dadurch gekennzeichnet, daß** der Abstreichkörper (2.1') aus mehreren getrennten mit dem Tragarm (2.2') lösbar verbundenen Segmenten (18) besteht.

17. Rotationsbandabstreicher nach Anspruch 1, **dadurch gekennzeichnet, daß** mehrere Abstreichelemente unterschiedlicher radialer Erstreckung vorgesehen sind.

18. Rotationsbandabstreicher nach Anspruch 1, **gekennzeichnet durch** hydraulische oder eine Massekraft hervorrufende Vorrichtungen zur Erzeugung des Anpreßdruckes zwischen Abstreichelement (2, 2', 2") und einer Tragseite eines Förderbandes (1) vorgesehen sind.

19. Rotationsbandabstreicher nach Anspruch 1, **gekennzeichnet durch** mindestens einen weiteren lateral versetzt anzuordnenden Rotationsbandabstreicher (50, 50'), insbesondere mit - in Bezug auf den anderen - gegenläufiger Drehrichtung.

## Claims

1. A rotary belt scraper (10; 30; 20; 50'; 60) for a conveyor belt, comprising an arrangement with at least one scraper element (2; 2'; 2.2'; 6; 6'; 7; 8) which has an edge region for bearing against a conveyor belt and which rotates about an axis of rotation extending substantially perpendicularly to a belt plane to be cleaned, for the removal of fouling adhering to the conveyor belt, wherein the scraper element has at least one region which has a component directed substantially radially with respect to the axis of rotation (17; 17') and a spring means (4; 4'; 42') is associated with each scraper element (2; 2'; 2.2'; 5; 6; 6'; 7; 8) in such a way that the scraper element (2; 2'; 2.2'; 5; 6; 6'; 7; 8) can be pressed by the spring force of the spring means (4; 4'; 4.2') substantially uniformly against a carrier side of the conveyor belt (1), which is to be cleaned, **characterised in that** each scraper element (2; 2'; 2.2'; 5; 6; 6'; 7; 8) is respectively articulated by way of a spring means (4) to a rotary head (3).

2. A rotary belt scraper according to claim 1 **characterised in that** the scraper element is adapted to form frictional engagement in operative contact with a conveyor belt to be cleaned at the lower run side of the conveyor belt installation for driving in rotation about the axis of rotation which is directed perpendicularly to the surface of the belt, wherein viewed transversely with respect to the belt direction the application of force predominates at one side of the axis of rotation.

3. A rotary belt scraper according to claim 2 **characterised in that** a plurality of scraper elements (2', 7) are arranged in rotationally symmetrical relationship.

4. A rotary belt scraper according to claim 3 **characterised in that** the scraper elements (2') form the spokes of a wheel.

5. A rotary belt scraper according to claim 1 **characterised in that** the scraper elements (2; 2'; 2.2'; 5; 6; 6'; 7; 8) are fixed to a centrally mounted rotary head (3, 3') and/or to a ring (13) mounted rotatably about the axis of rotation.

6. A rotary belt scraper according to claim 1 **characterised in that** the scraper elements (2") are arranged within a rotating ring (13) or ring portion in the form of a wheel tyre and extend from the inside thereof substantially radially inwardly.

7. A rotary belt scraper according to claim 1 **characterised in that** the narrow side of the scraper elements (2, 2', 2", 5, 6, 6', 7, 8) faces towards the carrier side of the conveyor belt (1), which is to be cleaned.

8. A rotary belt scraper according to claim 1 **characterised in that** the rotary head (3, 3') or the axis of rotation (17) of the scraper elements (2, 2', 2", 5, 6, 6', 7, 8) are designed for eccentric arrangement with respect to a longitudinal axis of a conveyor belt (1) in such a way that the scraper elements laterally asymmetrically project beyond the conveyor belt.

9. A rotary belt scraper according to claim 1 **characterised by** a small lateral angle of inclination α with respect to the plane defined by the conveyor belt (1).

10. A rotary belt scraper according to claim 1 **characterised in that** the scraper element (5, 6, 6', 7, 8) is of a configuration which is curved at least at one side.

11. A rotary belt scraper according to claim 10 **characterised in that** the scraper element (5, 6, 6', 7, 8) is of an arcuate or S-shaped configuration.

12. A rotary belt scraper according to claim 1 **characterised in that** the free ends of a plurality of scraper elements (2, 2') are connected by spacers (5, 5').

13. A rotary belt scraper according to claim 1 **characterised in that** the scraper elements (2, 2', 2") are adapted to be replaceable and/or adjustable and/or comprise a carrier arm (2.2') which does not contact the conveyor belt and a scraper body (2.1') which bears against the belt and which is not of the complete radial length of the scraper element.

14. A rotary belt scraper according to claim 1 **characterised in that** the scraper body (2.1') comprises rubber, plastic material or metal.

15. A rotary belt scraper according to claim 14 **characterised in that** when using plastic material polyurethane is provided while when using a metal there is provided a hard metal material, in particular a tool steel with one or more alloy constituents of Cr, Mo or Va with a proportion or proportions by weight in the range of from 0.5 to 5%.

16. A rotary belt scraper according to claim 1 **characterised in that** the scraper body (2.1') comprises a plurality of separate segments (18) releasably connected to the carrier arm (2.2').

17. A rotary belt scraper according to claim 1 **characterised in that** there are provided a plurality of scraper elements of different radial extent.

18. A rotary belt scraper according to claim 1 **characterised by** hydraulic devices or devices causing a force due to the effect of gravity for producing the contact pressure between a scraper element (2, 2', 2") and a carrier side of a conveyor belt (1).

19. A rotary belt scraper according to claim 1 **characterised by** at least one further rotary belt scraper (50, 50') which is to be arranged in laterally displaced relationship, in particular with a direction of rotation which is opposite in relation to the others.

## Revendications

1. Racleur de bande rotatif (10 ; 20 ; 30 ; 50' ; 60) pour une bande de convoyage, constitué par un agencement comportant au moins un élément de raclage (2 ; 2' ; 2.2' ; 6 ; 6' ; 7 ; 8) qui comprend une zone d'arête réalisée pour s'appliquer contre une bande de convoyage et qui est en rotation autour d'un axe de rotation sensiblement perpendiculaire à un plan de bande à nettoyer et qui est destiné à enlever des saletés adhérant à la bande de convoyage, dans lequel l'élément de raclage comprend au moins une zone qui présente une composante dirigée sensiblement radialement par rapport à l'axe de rotation (17 ; 17'), et un élément ressort (4 ; 4' ; 4.2') est associé à chaque élément de raclage (2 ; 2' ; 2.2' ; 6 ; 6' ; 7 ; 8), de telle sorte que l'élément de raclage (2 ; 2' ; 2.2' ; 6 ; 6' ; 7 ; 8) est susceptible d'être pressé sensiblement uniformément contre un côté porteur à nettoyer de la bande de convoyage (1) sous la force de l'élément ressort (4 ; 4' ; 4.2'), **caractérisé en ce que** chaque élément de raclage (2 ; 2' ; 2.2' ; 6 ; 6' ; 7 ; 8) est articulé sur une tête de rotation respective (3) par l'intermédiaire d'un élément ressort (4).

2. Racleur de bande rotatif selon la revendication 1, **caractérisé en ce que** pour former une coopération de friction avec une bande de convoyage à nettoyer, l'élément de raclage est réalisé sur le côté du brin inférieur de l'installation à bande de convoyage en contact d'action pour l'entraînement en rotation autour de l'axe de rotation dirigé perpendiculairement à la surface de la bande, l'application de force étant prépondérante sur un côté de l'axe de rotation, vue perpendiculairement dans la direction de la bande.

3. Racleur de bande rotatif selon la revendication 2, **caractérisé en ce que** plusieurs éléments de raclage (2', 7) sont agencés à symétrie de révolution.

4. Racleur de bande rotatif selon la revendication 3, **caractérisé en ce que** les éléments de raclage (2') forment les rayons d'une roue.

5. Racleur de bande rotatif selon la revendication 1, **caractérisé en ce que** les éléments de raclage (2, 2', 2", 6, 6', 7, 8) sont fixés sur une tête de rotation (3, 3') montée au centre et/ou sur un anneau (13) monté en rotation autour de l'axe de rotation.

6. Racleur de bande rotatif selon la revendication 1, **caractérisé en ce que** les éléments de raclage (2") sont agencés à l'intérieur d'un anneau en rotation (13) ou d'un anneau partiel sous la forme d'une jante de roue et s'étendent depuis son côté intérieur sensiblement radialement vers l'intérieur.

7. Racleur de bande rotatif selon la revendication 1, **caractérisé en ce que** le petit côté des éléments de raclage (2, 2', 2", 5, 6, 6', 7, 8) est tourné vers le côté porteur à nettoyer de la bande de convoyage (1).

8. Racleur de bande rotatif selon la revendication 1, **caractérisé en ce que** la tête de rotation (3, 3') ou l'axe de rotation (17) des éléments de raclage (2, 2', 2", 5, 6, 6', 7, 8) sont réalisés, pour l'agencement excentrique par rapport à un axe longitudinal d'une bande de convoyage (1), de telle sorte que les éléments de raclage dépassent latéralement de façon asymétrique au-delà de la bande de convoyage.

9. Racleur de bande rotatif selon la revendication 1, **caractérisé par** un faible angle d'inclinaison latéral α par rapport du plan tendu par la bande de convoyage (1).

10. Racleur de bande rotatif selon la revendication 1, **caractérisé en ce que** l'élément de raclage (5, 6, 6', 7, 8) présente un tracé incurvé sur au moins un côté.

11. Racleur de bande rotatif selon la revendication 10, **caractérisé en ce que** l'élément de raclage (5, 6, 6', 7, 8) est réalisé en forme d'arc ou en forme de S.

12. Racleur de bande rotatif selon la revendication 1, **caractérisé en ce que** les extrémités libres de plusieurs éléments de raclage (2, 2') sont reliées par des éléments d'écartement (5, 5').

13. Racleur de bande rotatif selon la revendication 1, **caractérisé en ce que** les éléments de raclage (2, 2', 2") sont réalisés interchangeables et/ou avec rattrapage et/ou sont constitués par un bras porteur (2.2') qui n'est pas en contact avec la bande de convoyage et par un corps de raclage (2.1') qui s'applique contre la bande et qui ne présente pas la longueur radiale totale de l'élément de raclage.

14. Racleur de bande rotatif selon la revendication 1, **caractérisé en ce que** le corps de raclage (2.1') est constitué en caoutchouc, en matière plastique ou en métal.

15. Racleur de bande rotatif selon la revendication 14, **caractérisé en ce que** dans le cas de l'utilisation d'une matière plastique, il est prévu du polyuréthanne, tandis que dans le cas de l'utilisation d'un métal, il est prévu un matériau en métal dur, en particulier un acier à outils avec un ou plusieurs composants d'alliage parmi Cr, Mo ou Va avec des proportions pondérales comprises entre 0,5 et 5 %.

16. Racleur de bande rotatif selon la revendication 1, **caractérisé en ce que** le corps de raclage (2.1') est constitué par plusieurs segments séparés (18) reliés de façon détachable au bras porteur (2.2').

17. Racleur de bande rotatif selon la revendication 1, **caractérisé en ce qu'**il est prévu plusieurs éléments de raclage présentant des extensions radiales différentes.

18. Racleur de bande rotatif selon la revendication 1, **caractérisé par** des dispositifs hydrauliques ou provoquant une force de masse pour générer une pression d'application entre l'élément de raclage (2, 2', 2") et un côté porteur d'une bande de convoyage (1).

19. Racleur de bande rotatif selon la revendication 1, **caractérisé par** au moins un autre racleur de bande rotatif (50, 50') à agencer en décalage latéral et présentant en particulier un sens de rotation opposé à celui de l'autre racleur.
